# EUROPÄISCHE PATENTSCHRIFT

(11) **EP 1 280 401 B1**
(45) Veröffentlichungstag und Bekanntmachung des Hinweises auf die Patenterteilung: **05.11.2003**
(21) Anmeldenummer: 01936027.0
(22) Anmeldetag: 03.05.2001
(51) Int. Cl.: A01K 27/00

(54) **WICKELLEINE FÜR TIERE**
RETRACTABLE LEASH FOR ANIMALS
LAISSE A ENROULEUR POUR ANIMAUX

(30) Priorität: 05.05.2000 DE 20008014 U
(43) Veröffentlichungstag der Anmeldung: 05.02.2003
(73) Patentinhaber: Meissner, Eleonore, 66111 Saarbrücken (Herbitzheim) (DE)
(72) Erfinder: MÜLLER, Roland, 66453 Gersheim (DE)
(86) Internationale Anmeldenummer: DE0101662
(87) Internationale Veröffentlichungsnummer: WO01084917

(56) Entgegenhaltungen:
- DE-U- 20 008 014
- DE-U- 29 816 372
- US-A- 3 693 596

## Beschreibung

Die Erfindung betrifft eine Wickelleine für Tiere, die ein Gehäuse aufweist, in dem eine mit Federkraft vorgespannte Rolle angeordnet ist, in der die Restlänge der Leine aufnehmbar ist und die durch ein Betätigungsorgan arretierbar ist.

Wickelleinen für Tiere haben gegenüber herkömmlichen Leinen den Vorteil, dass sie die überschüssige Leine automatisch auf einer mit Federkraft vorgespannten Rolle vorhalten. Bei Bedarf kann durch Betätigung einer Taste die Leine für eine bestimmte Auszugslänge temporär oder durch Betätigung einer weiteren rastenden Taste permanent festgestellt werden. Die permanente Feststellung auf eine bestimmte Leinenlänge hat den Vorteil, dass sich die Leine ohne eine Taste zu betätigen, nicht weiter herausziehen läßt. Der Nachteil besteht aber darin, dass sich die Leine nicht länger automatisch aufwickelt. Wird also die festgestellte Länge unterschritten, so kommt die Leine auf dem Boden zu liegen, wird ggf. verschmutzt, das Tier oder die Führungsperson können sich mit den Beinen in der Leine verwickeln oder Passanten können über die Leine stolpern, da sie auf dem Boden liegend unter Umständen schwer zu erkennen ist.

Aus der DE 85 09 585 U1 ist eine Vorrichtung bekannt, die die zuvor beschriebenen Nachteile zu verhindern sucht. Hier wurde das prinzipielle Problem erkannt und ein erster Lösungsansatz beschrieben. Mit dieser Vorrichtung kann die Auszugslänge der Leine in einer einzigen, durch die Bauart vorbestimmten Länge, zusätzlich begrenzt werden. So kann - wie nachzulesen ist - eine Begrenzung etwa bei der halben Leinenlänge erfolgen. Allerdings ist die Begrenzung abhängig vom Aufwickeldurchmesser der mittels Federkraft vorgespannten Wickelrolle. Das bedeutet, dass die-Genauigkeit der Begrenzung durch die Anzahl der Lagen der Leine auf der Wickelrolle bestimmt wird. Eine Lage entspricht je nach Leinenart etwa einem Abrollen von etwa einem Meter. Wickelt sich nun die Leine auf der Wickelrolle nicht streng in parallelen Windungen auf, sondern in übereinander liegenden Windungen, so kann die Begrenzungslänge um 1 bis 2 Meter variieren. Bauart bedingt rastet zwar die dort beschriebene Sperrklinke bei einer festgelegten Abwicklung der Leine ein und verhindert damit das weitere Ausziehen der Leine, andererseits muss sich die Leine aber erst durch die Bauart bedingte Hysterese (Unterschied zwischen Einrasten und ausrasten) um mindestens 2 Lagen aufwickeln, bevor die beschriebene Sperrklinke sich in ihre Ausgangsposition zurückbewegt. Dies entspricht einem Aufwickelweg von ca. 2 Metern.

Zusammengefasst hat die beschriebene Vorrichtung drei entscheidende Nachteile. Zum Ersten ist nur eine einzige Zwischenlänge der Leine aktivierbar, was hinsichtlich der Handhabung sehr unpraktisch ist, da eine Leine mit einer Länge von z.B. 7 Metern sich nur auf eine einzige Zwischenlänge feststellen lässt. Zum Zweiten kann diese Zwischenlänge unvorhergesehen durch z.B. das Aufwickelverhalten der Leine auf der Wickelrolle stark variieren und somit nicht von der Führungsperson beeinflusst werden. Diese kann sich also nicht darauf verlassen, dass die Leine immer bei der gleichen Auszugslänge blockiert, was z.B. im Stadtbereich zu einem unkalkulierbaren Risiko führen kann. Zum Dritten muss sich die Leine zuerst erheblich verkürzen (aufwickeln), um den Sperrmechanismus in seinen Ausgangszustand zurückzuversetzen, damit bei einem erneuten Abwickeln der Leine diese erneut gestoppt werden kann. Dies ist in der Praxis unbrauchbar, da der eigentliche Zweck der Wickelleine darin liegt, dem Tier möglichst viel Bewegungsfreiheit zu bieten und es nicht an bestimmte Verhaltensmuster zu gewöhnen, bevor es mit einer solchen Leine geführt werden kann.

Ebenfalls kann es vorkommen, dass ein Tier die Leine in seiner unmittelbaren Nähe durchbeißt. In einem solchen Fall wickelt sich die Leine mit einer sehr hohen Geschwindigkeit auf. Dabei kann das Leinenende unkontrolliert um sich schlagen und ggf. jemanden verletzen. Auf jeden Fall wird die Leine komplett von der mittels Federkraft vorgespannten Rolle aufgewickelt und ist somit von außen nicht mehr erreichbar.
Um die Leine wieder funktionsfähig zu machen, muß das komplette Gehäuse geöffnet werden. Die Feder der Rolle muß erneut vorgespannt und das Gehäuse mit allen Einzelteilen neu montiert werden.

Ist die Leine nicht durch eine Taste festgestellt, kann sich ein Tier oftmals sehr ruckartig von der Führungsperson entfernen, bevor diese die Möglichkeit hat das Tier zu stoppen. In der Zwischenzeit kann sich das Tier bereits mehrere Meter von der Führungsperson entfernt haben, um z.B. einem anderen hinterher zu springen. Hierdurch können unvorhersehbare Gefahrensituationen entstehen. Auch kann durch das abrupte Abstoppen der Leine in einer solchen Situation das Tier empfindlich im Genickbereich verletzt werden, was zu gravierenden Folgeschäden führen kann.

Aufgabe der Erfindung ist es somit, eine Wickelleine zu schaffen, bei der diese Nachteile vermieden werden.

Dies wird erfindungsgemäß dadurch erreicht, dass mittels einer Vorrichtung die maximale Auszugslänge der Leine beliebig einstellbar ist, und dass bei Unterschreiten dieser Auszugslänge der ungenutzte Teil der Leine automatisch von der Rolle aufnehmbar ist.

Somit liegt jederzeit eine gestraffte Leine vor, ohne dass das Tier in seiner Bewegungsfreiheit unnötig eingeschränkt wird.

Eine Weiterbildung der Erfindung besteht darin, dass Mittel vorgesehen sind, mittels denen bei Erreichen einer bestimmten Aufwickelgeschwindigkeit der Leine das weitere Aufwickeln verhinderbar ist. Alternativ kann auch vorgesehen sein, dass Mittel vorgesehen sind, mittels denen bei Unterschreiten einer bestimmten Vorspannung der Leine das weitere Aufwickeln verhinderbar ist.

Es ist zweckmäßig, dass Mittel vorgesehen sind, mittels denen bei Erreichen einer bestimmten Abwickelbeschleunigung der Leine das weitere Abwickeln verhinderbar ist.

Schließlich liegt es auch im Rahmen der Erfindung, dass Mittel vorgesehen sind, mittels denen die eingestellte Restauszugslänge der Leine anzeigbar ist.

Es ist ebenso zweckmäßig, dass Mittel vorgesehen sind, mittels denen eine ruckartige Zunahme der Auszugskraft beim automatischen Abstoppen der Leine verhinderbar ist.

Im folgenden werden Ausführungsbeispiele der Erfindung anhand von Zeichnungen erläutert.

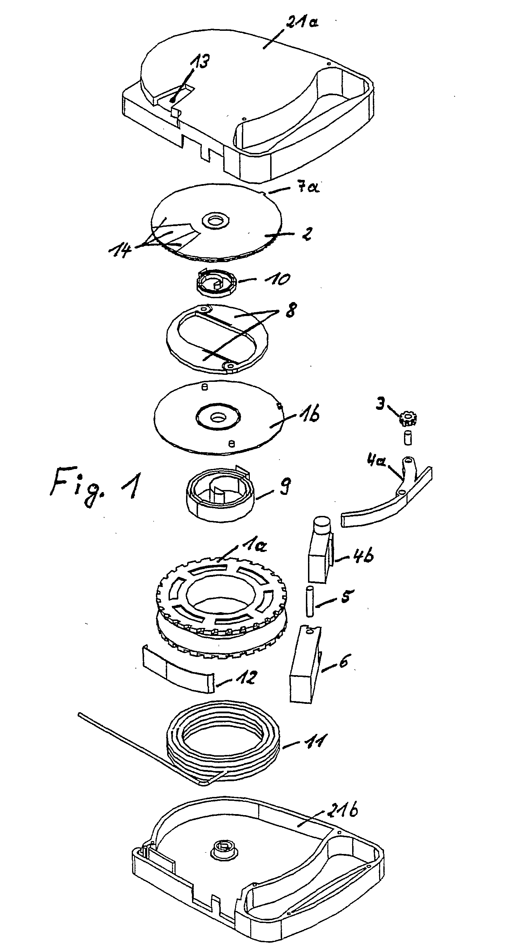

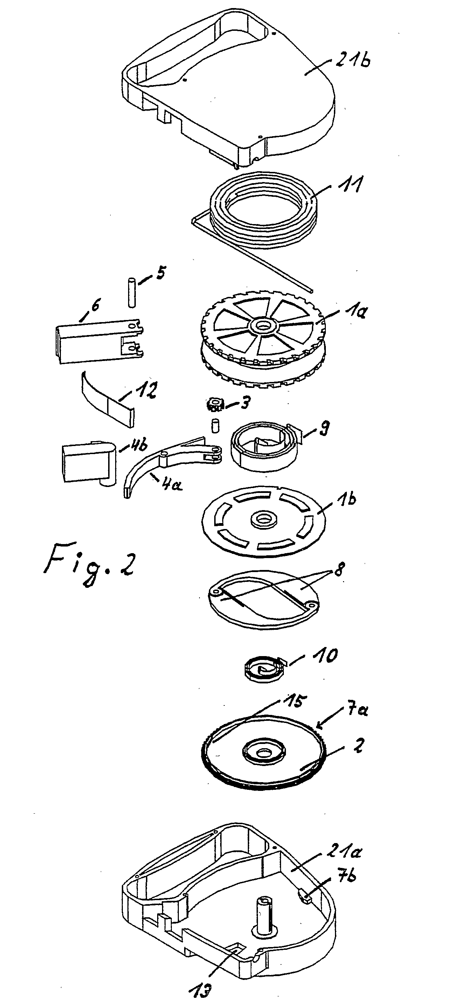

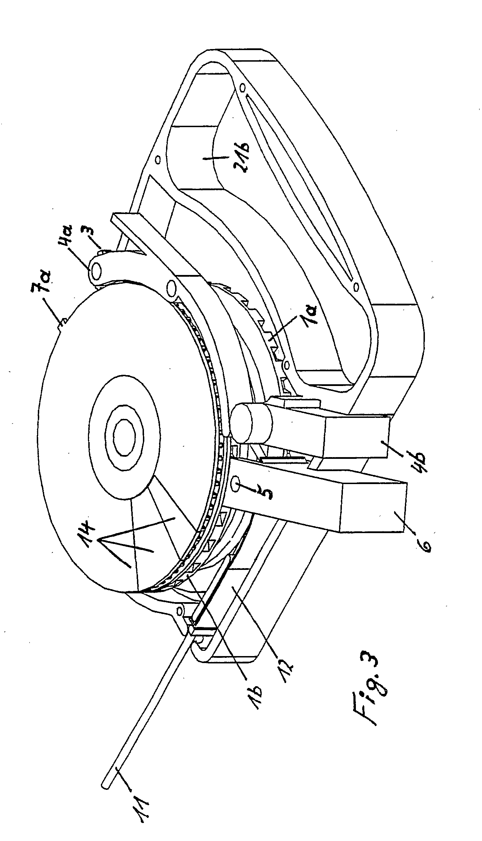

Es zeigen
- Fig. 1 und Fig. 2: Explosionszeichnungen einer erfindungsgemäßen Wickelleine,

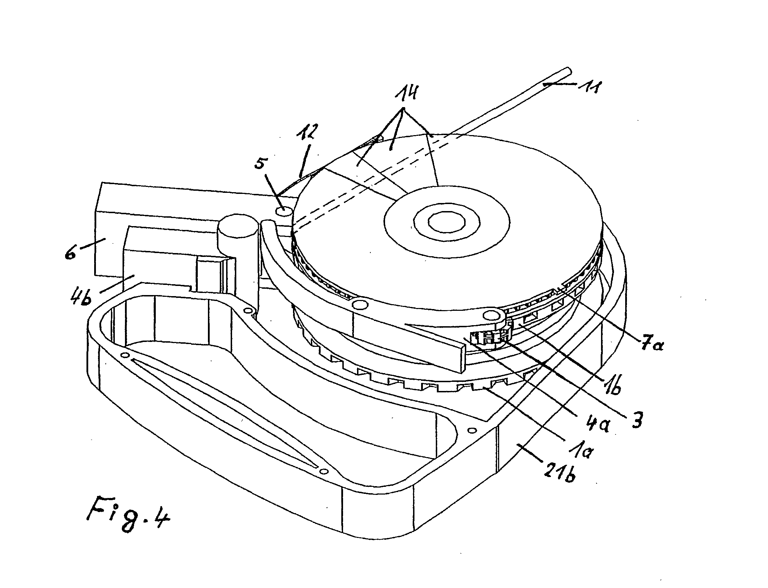

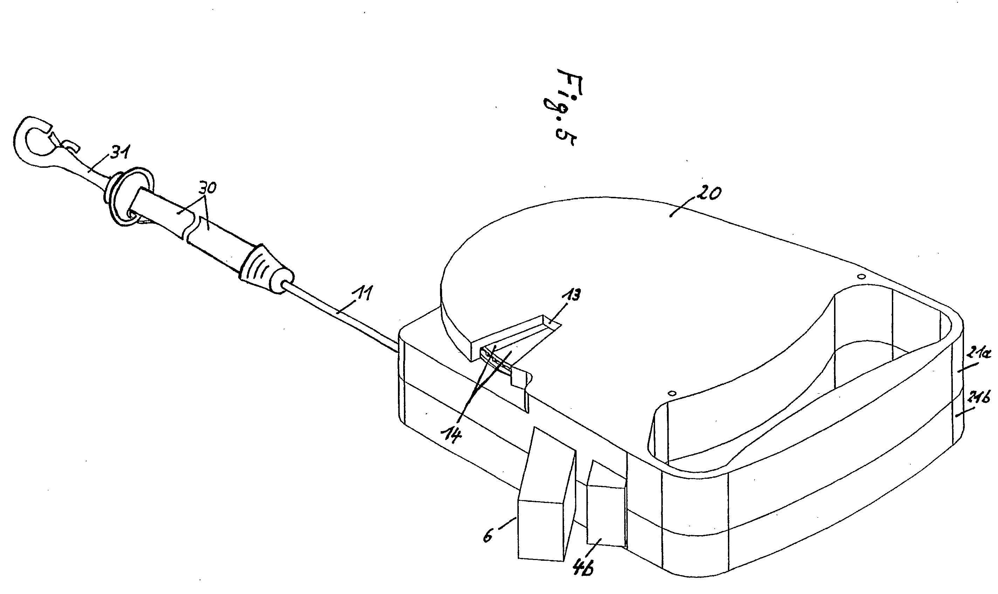

- Fig. 3 und Fig. 4: entsprechende Darstellungen bei geöffnetem Gehäuse,

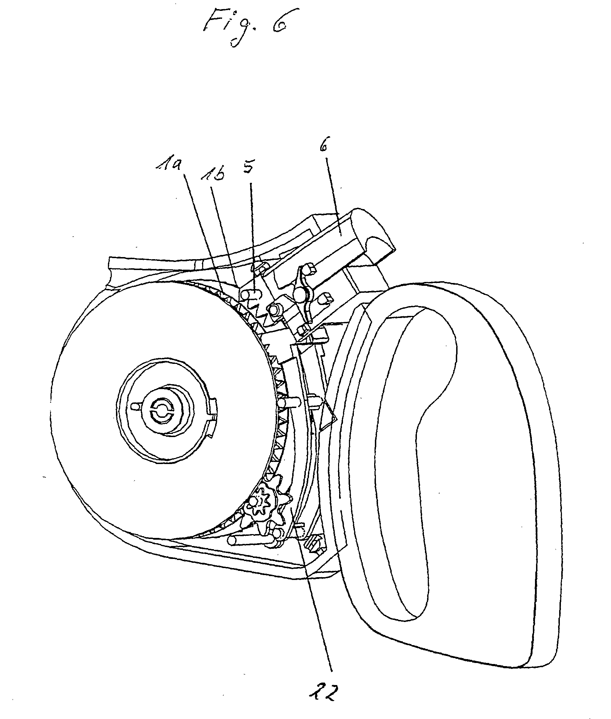

- Fig. 5: eine Darstellung des geschlossenen Gehäuses.
- Fig. 6: eine Weiterbildung des geöffneten Leinengehäuses mit alternativer Spannkraftbremse.

Die erfindungsgemäße Vorrichtung ist vorzugsweise in einem Gehäuse (21a,21b) mit einem Handgriff angeordnet, aus dem das mit einem Beißgurt (30) und einem Befestigungshaken (31) versehene Ende der Wickelleine (11) herausragt. Die Leine (11) wird in dem Gehäuse (21a,21b) auf einer Rolle (1a,b) aufgewickelt.

Wie aus den Figuren hervorgeht, ist parallel zur Rolle (1a,b), auf der die Leine (11) aufgewickelt wird, ein Zahnrad (2) etwa gleichen Durchmessers angeordnet, das mittels eines weiteren Zahnrades (3) in einem bestimmten, durch Druck auf einen Hebel (4a, b) lösbarem Übersetzungsverhältnis zur Rolle (1a,b) steht. Das Zahnrad (2) wird mittels einer Feder (10) auf eine durch einen Endanschlag (7a,b) festgelegte Position zurückgesetzt, sobald durch Druck auf einen Hebel (4a,b) das damit verbundene Zahnrad (3) die Verbindung zwischen der Rolle (1a,b) und dem Zahnrad (2) trennt. Wird die Verbindung in dieser Position durch Loslassen des Hebels (4a,b) erneut hergestellt, kann die Leine (11) nicht weiter ausgezogen werden, da sich das Zahnrad (2) an seinem Endanschlag (7a,b) befindet und damit eine erhöhte Auszugskraft in der Leine (11) verursacht. Diese verursacht ihrerseits eine erhöhte Kraft in der Umlenkrolle (5) der Stopptaste (6), die diese in Richtung Mitte der Rolle (1a,b) zieht. Ist die Auszugskraft groß genug, so wird die Stopptaste (6) fest mit der Rolle (1a,b) verbunden und dadurch der weitere Auszug der Leine (11) verhindert.

Reduziert sich die Auszugskraft, so wird die Verbindung der Stopptaste (6) mit der Rolle (1a,b) gelöst und die Leine (11) wird durch die Rolle (1a,b) aufgewickelt. In diesem Fall bewegt sich das Zahnrad (2) entgegengesetzt zu seinem Endanschlag (7a,b) und hat damit keinen Einfluss auf die weitere Funktion der Wickelleine (20). Erst wenn die Leine (11) erneut ausgezogen wird und das Zahnrad (2) dadurch seinen Endanschlag (7a,b) erreicht, wird die Leine (11) erneut gestoppt. Dadurch wird erreicht, dass auch bei einer kleinen Verkürzung der freien Leinenlänge (Aufwickeln) der Leine (11) bei einem erneuten Abwickeln genau an der zuvor bestimmten Position gestoppt wird.

Um zu verhindern, dass die Leine (11) komplett von der mittels Federkraft vorgespannten Rolle (1a,b) aufgewickelt wird, wenn ein Tier die Leine (11) durchbeißt oder sie aufgrund einer Schwachstelle reißt und die Leine (11) somit von außen nicht mehr erreichbar ist, wird erfindungsgemäß eine Vorrichtung vorgeschlagen, die bei Erreichen einer bestimmten Aufwickelgeschwindigkeit der Leine (11) das weitere Aufrollen stoppt, indem gegen Federkraft arbeitende Schwungmassen (8) ihren Durchmesser derart erweitern, dass der frei bewegliche Teil der Schwungmassen (8) sich mit dem Innenanschlag (15) des Zahnrades (2) verbindet und dadurch das weitere Aufrollen der Leine (11) verhindert. Wird nun die Leine (11) erneut herausgezogen, löst sich die Verbindung der Schwungmassen (8) mit dem Zahnrad (2), und die normale Funktion der Wickelleine (20) ist wieder hergestellt.

Alternativ dazu wird eine Vorrichtung, wie sie in Figur 6 dargestellt ist, vorgeschlagen, die bei Unterschreiten einer bestimmten Vorspannung der Leine (11) das weitere Aufrollen verhindert, indem die Leine (11) über die untere Seite eines mittels Federkraft entgegengesetzt vorgespannten und mittig gelagerten Umlenkhebels (22) geleitet wird und dessen obere Seite in die Verzahnung der Rolle (1a,b) eingreift. Wird nun die Leine (11) erneut herausgezogen, entsteht damit eine Vorspannung in der Leine, die gegen die Federvorspannung des Umlenkhebels (22) arbeitet. Dadurch löst dieser die Verbindung mit der Rolle (1a,b) und die normale Funktion der Wickelleine (20) ist wieder hergestellt. Als weitere Alternative kann auch die mittels Federkraft vorgespannte Stopptaste (6) selbst, bei Unterschreiten einer bestimmten Vorspannung der Leine (11), die über die Umlenkrolle (5) der Stopptaste (6) geleitet wird, das weitere Aufrollen der Rolle (1a,b) und damit auch der Leine (11) verhindern, indem sich die Stopptaste (6) entgegengesetzt zum Zentrum der Rolle (1a,b) bewegt, und dadurch ein Teil der Stopptaste (6) von innen in die Rolle (1a,b) eingreift.

Um zu verhindern, dass sich ein Tier ruckartig von der Führungsperson entfernt, ist erfindungsgemäß eine Vorrichtung vorgesehen, die bei Erreichen einer bestimmten Auszugsbeschleunigung der Leine (11) die Stopptaste(6) betätigt, und damit das weitere Ausziehen der Leine (11) verhindert. Dies wird dadurch erreicht, dass bei einer bestimmten Rotationsbeschleunigung der mittels einer Feder (9) vorgespannten Rolle (1a,b) die Auszugskraft der Leine (11), die über die Umlenkrolle (5) in der Stopptaste (6) umgelenkt wird, größer wird als die Kraft in der Rückhaltefeder (12) der Stopptaste (6). Dadurch wird die Stopptaste (6) mit der Rolle (1a,b) verbunden und so das weitere Ausziehen der Leine (11) verhindert. Wird die Distanz zwischen Tier und Führungsperson verkürzt, so reduziert sich die Auszugskraft der Leine (11) und die Rückhaltefeder (12) zieht die Stopptaste (6) in ihren Ausgangszustand zurück und löst damit die Verbindung zwischen Stopptaste (6) und Rolle (1a,b). Somit ist die normale Funktion der Wickelleine (20) wieder hergestellt.

Um zu verhindern, dass die Auszugskraft der Leine (11) ruckartig zunimmt, wenn die eingestellte Leinenlänge erreicht ist, und die Leine (11) von der erfindungsgemäßen Vorrichtung automatisch gestoppt wird, und dadurch das Tier gesundheitlichen Schaden durch Verletzungen im Genickbereich erleiden kann, wird der sogenannte Beißgurt (30), der den aufwickelbaren Teil der Leine (11) mit dem Befestigungshaken (31) am Halsband des Tieres verbindet, aus einem Material gefertigt, das bis zum Erreichen seiner festgelegten Endlänge elastisch bleibt. Dies ist ebenso zweckmäßig wie kostengünstig, da bei der Mehrzahl der am Markt befindlichen Wickelleinen bereits ein Beißgurt (30) eingesetzt wird, und somit dieser lediglich aus einem anderen Material mit zumindest anfänglich elastischen Eigenschaften hergestellt werden muß.

Die erfindungsgemäße Anzeige der Restauszugslänge der Leine (11) wird dadurch erreicht, dass sich in dem Gehäuseteil (21a) ein Fenster (13) befindet, durch das man einen Teil des Zahnrades (2) erkennen kann. Die Außenseite des Zahnrades (2) ist farblich in bestimmte Teilbereiche (14) unterteilt. Die Unterteilung kann z.B. in einer "Rot-Gelb-Grün" Anordnung erfolgen, wobei der rote Bereich etwa der Fenstergröße entspricht.

Wird nun der Hebel (4a,b) gedrückt, dreht sich das Zahnrad (2) bis zu seinem Endanschlag (7a,b). In dieser Stellung ist der komplette rote Teilbereich zu sehen. Nach Loslassen des Hebels (4a,b) ist nun die maximale Auszugslänge der Leine (11) festgelegt. Dies bedeutet, dass bei Darstellung des kompletten roten Teilbereichs die maximale Auszugslänge der Leine (11) erreicht ist. Verkürzt sich nun der Abstand zwischen dem Tier und der Führungsperson, so ist in dem Fenster zuerst "Rot-Gelb" dargestellt. Dies variiert weiter über die Darstellung "Gelb", "Gelb-Grün" bis hin zu "Grün". Die farbliche Unterteilung kann bestimmten Auszugslängen zugeordnet sein. So kann z.B. die Farbe Rot einer Auszugslänge von 0,5 m entsprechen, die Farbe Gelb einer Auszugslänge von 1 m und die Farbe Grün der Restlänge. Die Führungsperson kann somit sehr einfach erkennen, wenn die temporär eingestellte maximale Auszugslänge der Leine (11) erreicht ist, bzw. wie weit sich das Tier noch entfernen kann, bevor es von der Wickelleine (20) gestoppt wird.

## Patentansprüche

1. Wickelleine für Tiere, die ein Gehäuse (21a,b) aufweist, in dem eine mit Federkraft vorgespannte Rolle (1a,b) angeordnet ist, in der die Restlänge der Leine (11) aufnehmbar ist und die durch ein Betätigungsorgan (6) arretierbar ist, **dadurch gekennzeichnet, dass** mittels einer Vorrichtung die maximale Auszugslänge der Leine (11) beliebig einstellbar ist, und dass bei Unterschreiten dieser Auszugslänge der ungenutzte Teil der Leine (11) automatisch von der Rolle (1a,b) aufnehmbar ist.

2. Vorrichtung gemäß Anspruch 1, **dadurch gekennzeichnet, dass** Mittel vorgesehen sind, mittels denen bei Erreichen einer bestimmten Aufwickelgeschwindigkeit der Leine (11) das weitere Aufwickeln verhinderbar ist.

3. Vorrichtung gemäß Anspruch 1, **dadurch gekennzeichnet, dass** Mittel vorgesehen sind, mittels denen bei Unterschreiten einer bestimmten Vorspannung der Leine (11) das weitere Aufwickeln verhinderbar ist.

4. Vorrichtung gemäß Anspruch 1, **dadurch gekennzeichnet, dass** Mittel vorgesehen sind, mittels denen bei Erreichen einer bestimmten Abwickelbeschleunigung der Leine (11) das weitere Abwickeln verhinderbar ist.

5. Vorrichtung gemäß Anspruch 1, **dadurch gekennzeichnet, dass** Mittel (13, 14) vorgesehen sind, mittels denen die eingestellte Restauszugslänge der Leine (11) anzeigbar ist.

6. Vorrichtung gemäß Anspruch 1, **dadurch gekennzeichnet, dass** Mittel (30) vorgesehen sind, mittels denen ein ruckartiger Anstieg der Auszugkraft der Leine (11) verhinderbar ist.

## Claims

1. A retractable leash for animals, having a housing (21 a,b) in which a roller (1 a,b) under initial spring-loading is arranged, on which the residual length of the leash (11) may be stored and which may be stopped by means of an actuating member (6),
**characterized in that**
the maximum extension length of the leash (11) may be set to any length with a device, and that when this extension length is not fully deployed the unused portion of the leash (11) may be retracted automatically by the roller (1 a,b).

2. A device according to claim 1, **characterized in that** means are provided with which further retraction may be stopped when a given retraction speed of the leash (11) is reached.

3. The device according to claim 1, **characterized in that** means are provided with which further retraction may be stopped when the initial tension of the leash (11) falls below a given value.

4. The device according to claim 1, **characterized in that** means are provided with which further unwinding may be stopped when a given unwinding speed of the leash (11) is reached.

5. The device according to claim 1, **characterized in that** means (13, 14) are provided with which the preset remaining extension length of the leash (11) can be displayed.

6. The device according to claim 1, **characterized in that** means (30) are provided with which a sudden rise in the force required to extend the leash (11) may be prevented.

## Revendications

1. Laisse à enrouleur pour animaux, qui présente un boîtier (21 a,b) dans lequel est disposé un rouleau (1 a,b) précontraint par force de ressort où peut être absorbée la longueur résiduelle de la laisse (11) et qui peut être bloqué par un organe d'actionnement (6),
**caractérisée en ce que**
la longueur d'extraction maximale de la laisse (11) peut être réglée à volonté à l'aide d'un dispositif, et qu'en cas de non atteinte de cette longueur d'extraction, la partie inutilisée de la laisse (11) peut être absorbée automatiquement par le rouleau (1 a,b).

2. Dispositif selon la revendication 1, **caractérisé en ce que** sont prévus des moyens qui permettent d'empêcher la poursuite de l'enroulement lorsqu'une certaine vitesse d'enroulement de la laisse (11) est atteinte.

3. Dispositif selon la revendication 1, **caractérisé en ce que** sont prévus des moyens qui permettent d'empêcher la poursuite de l'enroulement lorsqu'une certaine précontrainte de la laisse (11) n'est pas atteinte.

4. Dispositif selon la revendication 1, **caractérisé en ce que** sont prévus des moyens qui permettent d'empêcher la poursuite du déroulement lorsqu'une certaine accélération du déroulement de la laisse (11) est atteinte.

5. Dispositif selon la revendication 1, **caractérisé en ce que** sont prévus des moyens (13, 14) qui permettent d'afficher la longueur d'extraction résiduelle fixée de la laisse (11).

6. Dispositif selon la revendication 1, **caractérisé en ce que** sont prévus des moyens (30) qui permettent d'empêcher une montée par à-coups de la force d'extraction de la laisse (11).
